# FASCICULE DE BREVET EUROPEEN

(11) **EP 2 333 247 B1**
(45) Date de publication et mention de la délivrance du brevet: **29.02.2012**
(21) Numéro de dépôt: 10015212.3
(22) Date de dépôt: 02.12.2010
(51) Int. Cl.: F01D 15/12, F02C 3/30, F16H 57/04

(54) **Procédé pour augmenter la sécurité d'une installation motrice, et installation motrice apte à mettre en oeuvre ce procédé**
Verfahren zur Erhöhung der Sicherheit einer Triebwerkseinheit und Triebwerkseinheit für die Umsetzung dieses Verfahrens.
Process for improving the safety of power assembly, and a power assembly suitable for setting this process.

(30) Priorité: 11.12.2009 FR 0906012
(43) Date de publication de la demande: 15.06.2011
(73) Titulaire: EUROCOPTER, 13725 Marignane Cédex (FR)
(72) Inventeur: Vialle, Michel, 13100 Aix en Provence (FR); Corpron, Alban, 13090 Aix en Provence (FR); Dyrla, Frédéric, 13320 Bouc Bel Air (FR)
(74) Mandataire: Pouillot, Laurent Pierre Paul

(56) Documents cités:
- EP-A1- 0 900 954
- EP-A2- 1 188 922
- FR-A1- 2 826 094
- FR-A1- 2 859 761
- US-A1- 2009 182 473

## Description

La présente invention concerne un procédé pour augmenter la sécurité d'une installation motrice, et une installation motrice apte à mettre en oeuvre ce procédé.

Plus particulièrement, l'invention se rapporte à une installation motrice d'un giravion, et notamment d'un hélicoptère. Le domaine technique de l'invention est donc le domaine technique des installations motrices, notamment d'aéronef de type giravion.

Le document FR 2 859 761, étant considéré comme étant l'art antérieur le plus proche, décrit :
- Premièrement, un procédé pour augmenter la sécurité d'une installation motrice munie d'au moins un moteur thermique et d'une boîte de transmission de puissance, au cours duquel on injecte un fluide comprenant de l'eau dans ledit moteur thermique pour augmenter une puissance développée par le moteur thermique ou pour diminuer ladite température sans modifier la puissance développée par le moteur thermique, ledit fluide étant prélevé dans un réservoir.
- Deuxièmement, toutes les caractéristiques du préambule de la revendication 9.

En effet, un giravion comporte une installation motrice pour mettre en rotation sa voilure tournante. L'installation motrice est munie d'un ou plusieurs moteurs thermiques pour mettre en mouvement les engrenages d'une boîte de transmission de puissance, dénommée boîte de transmission principale pour un hélicoptère, cette boîte de transmission de puissance entraînant alors en rotation la voilure tournante.

La boîte de transmission de puissance comporte des éléments mécaniques mobiles, de type engrenages et arbres, en contact les uns avec les autres. La friction des éléments mécaniques entre eux génère un échauffement tendant à coincer à terme ces éléments mécaniques si aucune disposition ne s'y oppose.

Pour éviter une destruction de la boîte de transmission de puissance, cette boîte de transmission de puissance est munie d'un circuit de lubrification principal, et avantageusement d'un circuit de lubrification secondaire. On se référera par exemple au document FR2826094. Le lubrifiant, projeté sous forme de jet ou encore de brouillard, refroidit les éléments mécaniques pour limiter leur échauffement.

La lubrification peut être réalisée à l'aide d'un lubrifiant de type huile.

A titre de variante, il est possible d'utiliser un fluide à forte chaleur latente apte à absorber un grand nombre de calorie lors d'un changement d'état, d'un état liquide vers un état gazeux. Ainsi, le lubrifiant peut être de l'eau pure ou encore un mélange à base d'eau, d'antigel et de lubrifiant. Par exemple, le lubrifiant connu généralement sous l'appellation glycol comporte de l'eau, 10% à 20% d'éthylène-glycol pour retarder le passage d'un état liquide vers un état solide, 0.1% à 1% de sulfure de sodium et de benzothiazole-2-yle, voire des huiles minérales sévèrement raffinées. Par suite, il est concevable d'utiliser le mélange décrit par la norme NF E48-602 catégorie HFC.

Par ailleurs, il est à noter que l'on entend dans l'ensemble du texte par « moteur thermique » les turbomoteurs ou encore l'ensemble des moteurs à pistons.

Chaque moteur thermique est à même de fonctionner à une pluralité de régimes de fonctionnement.

Par exemple, les limitations thermiques d'un moteur thermique et les limitations en couple de la boîte de transmission de puissance permettent de définir trois régimes normaux d'utilisation du moteur thermique d'un giravion:
- le régime de décollage, correspondant à une utilisation n'endommageant pas ni la boîte de transmission principale et ni le moteur thermique pendant une durée limitée de décollage, variant usuellement entre cinq et trente minutes: c'est la puissance maximale au décollage (PMD),
- le régime maximal continu correspondant à une utilisation n'endommageant pas ni la boîte de transmission principale et ni le moteur thermique pendant une durée illimitée: c'est la puissance maximale continue (PMC),
- le régime maximal en transitoire, buté ou non par la régulation : on parle alors de puissance maximale en transitoire (PMT).

Il existe aussi des régimes de surpuissance en urgence sur les giravions multi-moteurs, utilisés en cas de panne d'un turbomoteur:
- le premier régime d'urgence pendant lequel les possibilités de la boîte de transmission principale sur les étages d'entrée et les possibilités thermiques du moteur thermique sont utilisées au maximum : on parle de puissance de super urgence (PSU) utilisable pendant trente secondes consécutives, au maximum, et au moins trois fois pendant un vol. L'utilisation de la PSU peut entraîner la dépose et la révision du moteur thermique;
- le deuxième régime d'urgence pendant lequel les possibilités de la boîte de transmission principale sur les étages d'entrée et les possibilités du moteur thermique sont largement utilisées : on parle alors de puissance maximale d'urgence (PMU) utilisable pendant deux minutes après la PSU ou deux minutes trente secondes consécutives, au maximum ;
- le troisième régime d'urgence pendant lequel les possibilités de la boîte de transmission principale sur les étages d'entrée et les possibilités thermiques du moteur thermique sont utilisées sans endommagement : on parle de puissance intermédiaire d'urgence (PIU) utilisable trente minutes ou en continu pour le reste du vol après la panne du moteur thermique.

Cependant, la puissance développée par le moteur thermique durant un régime peut s'avérer insuffisante dans des conditions particulières, dans une atmosphère chaude par exemple.

Par exemple, la puissance de super urgence (PSU) peut être suffisante pour permettre au pilote de poser son aéronef, tout en étant insuffisante pour lui permettre de terminer sa mission. En outre, la durée d'utilisation de cette puissance de super urgence peut s'avérer limite voire insuffisante pour garantir la sécurité de l'aéronef.

Il est connu d'injecter de l'eau pure ou un mélange d'eau et d'alcool dans un turbomoteur pour augmenter la puissance qu'il développe à iso-température en sortie de la chambre de combustion. Par exemple, sur un turbomoteur à turbine libre, on injecte de l'eau pure ou un tel mélange pour augmenter la puissance développée sans augmenter la température des gaz à sortie de la chambre de combustion, cette température étant dénommée « température T4 » par l'homme du métier et dans la suite du texte.

L'injection d'eau pure a été utilisée sur les moteurs à pistons durant la seconde guerre mondiale puis sur les avions à turboréacteurs.

L'eau peut être injectée dans la chambre de combustion du moteur thermique. Par suite, la constitution des gaz générés par le générateur de gaz change. Il en résulte une modification de la capacité calorifique et de l'enthalpie massique de ces gaz. A iso-débit de gaz créé dans la chambre de combustion, la puissance générée par le moteur thermique augmente avec l'enthalpie massique des gaz créés.

Dès lors, dans un turbomoteur, injecter de l'eau permet de détendre des gaz à plus haute enthalpie massique à iso-température T4, tout en augmentant le débit d'air dans les turbines. La puissance développée par le turbomoteur se trouve donc augmentée.

Cependant, le débit de carburant est plus important à iso-température T4 dans la chambre de combustion, dans la mesure où l'énergie absorbée par la vaporisation de l'eau dans la chambre de combustion doit être compensée par un apport supplémentaire de chaleur.

Le moteur thermique étant un turbomoteur muni d'un générateur de gaz comportant une entrée d'air et un compresseur en amont d'une chambre de combustion, l'eau peut être injectée dans l'entrée d'air.

Dans ce cas, le débit massique total à travers l'entrée d'air est augmenté, apportant un surplus de puissance à iso-enthalpie massique. La puissance disponible à iso-température T4 et à iso-débit d'air est plus importante.

Cependant, le débit carburant est également augmenté à iso-température et iso-débit d'air.

On note que contrairement au cas précédent, le point de fonctionnement du compresseur est modifié. En outre, le compresseur doit généralement travailler plus pour fournir l'énergie nécessaire à l'évaporation de l'eau liquide.

L'injection d'eau peut se faire sous forme de brouillard. Pour que la méthode ait un intérêt, il faut que le brouillard soit assez fin pour permettre une évaporation de l'eau avant l'entrée dans le compresseur. Dès lors, la température à l'entrée du compresseur diminue permettant un meilleur rendement global et un débit réduit plus important. Toutefois, le compresseur doit fournir plus de travail dans la mesure où le débit massique est plus important. De plus, le point de fonctionnement du compresseur est modifié, une partie du surplus d'enthalpie généré servant à satisfaire ce besoin supplémentaire de puissance.

En outre, si le gain en puissance est positif, il n'est pas évident, à priori, que le rendement de la turbine soit meilleur avec l'injection d'eau. En effet, l'injection d'eau nécessite un débit de carburant plus fort qui induit une consommation spécifique plus importante.

En outre et surtout, l'emploi de la technique d'injection d'un fluide à base d'eau nécessite l'implémentation d'un dispositif muni d'un réservoir contenant ce fluide et d'un organe de commande gérant l'injection du fluide. Ce dispositif alourdit de fait l'installation motrice. Le gain réalisé dans certains cas par un tel dispositif est potentiellement limité voire détruit par l'augmentation massique liée à la présence d'un dispositif additionnel.

La présente invention a alors pour objet de proposer un procédé permettant d'augmenter la sécurité d'une installation motrice et donc la sécurité offerte à un aéronef par son installation motrice, en évitant une augmentation massique importante de l'installation motrice en résultant.

Selon l'invention, un procédé pour augmenter la sécurité d'une installation motrice munie d'au moins un moteur thermique et d'une boîte de transmission de puissance, le moteur thermique entraînant la boîte de transmission de puissance, la boîte de transmission de puissance ayant un système de lubrification principal et/ou de secours réalisé à l'aide d'un moyen aqueux comprenant de l'eau stocké dans un réservoir, est notamment remarquable en ce qu'au cours duquel procédé on injecte un fluide dans le moteur thermique pour augmenter une puissance développée par le moteur thermique sans augmenter la température d'un organe du moteur thermique ou pour diminuer la température de cet organe sans modifier la puissance développée par le moteur thermique, ce fluide étant prélevé dans ledit réservoir.

Autrement dit, on injecte un fluide comprenant de l'eau dans le moteur thermique pour aboutir à au moins une situation listée dans un catalogue de situations prédéterminées. Ce catalogue comprend au moins une des situations :
- l'augmentation d'une puissance développée par le moteur thermique sans augmenter la température d'un organe du moteur thermique, l'entrée d'un étage de turbine libre d'un turbomoteur par exemple,
- la diminution de la température d'un organe du moteur thermique sans modifier la puissance développée par le moteur thermique, la température T4 de l'entrée d'un étage de turbine libre d'un turbomoteur par exemple.

La combinaison caractérisant notamment ce procédé a pour résultat d'engendrer une surpuissance ou de rallonger la durée d'utilisation d'un régime par exemple.

L'invention propose d'injecter un fluide à base d'eau dans le moteur thermique pour permettre l'utilisation d'une puissance pendant une durée prolongée. Ainsi, un pilote peut requérir l'injection d'un fluide à base d'eau dans le moteur thermique s'il a besoin d'une surpuissance ou de prolonger la durée d'utilisation de la puissance développée à un instant donné.

Ce résultat augmente donc la sécurité de l'installation motrice. En effet, l'installation motrice étant agencée sur un véhicule de type giravion par exemple, les marges de sécurité offertes par l'installation motrice au véhicule sont augmentées par l'injection du fluide.

Or, le fluide est prélevé dans le réservoir alimentant un système de lubrification de la boîte de transmission principal, un système de lubrification principal ou de secours.

Ainsi, il n'est pas nécessaire d'implémenter un réservoir dédié contrairement à ce que suggère l'art antérieur. On limite alors au maximum le surcroît de masse apporté par le système d'injection de fluide. On note que l'injection peut aussi être commandée par un moyen existant, à savoir l'organe de régulation du moteur thermique ou encore le moyen de commande du système de lubrification de la boîte de transmission de puissance.

L'invention n'engendre donc pas une augmentation massique rédhibitoire contrairement aux préjugés existants.

L'invention peut de plus comporter une ou plusieurs des caractéristiques additionnelles qui suivent.

Par ailleurs, un organe mobile devant être mis en mouvement à une vitesse bornée par une vitesse maximale donnée à chaque instant, on injecte le fluide lorsque l'organe mobile se déplace à une vitesse supérieure à la vitesse maximale donnée. L'organe mobile peut être une turbine libre d'un turbomoteur ou un piston d'un moteur à piston. De même, l'organe mobile peut être l'arbre de sortie du moteur thermique.

Par exemple, en cas de panne du système régulation du débit carburant du moteur thermique, le moteur thermique peut s'emballer. L'organe mobile atteint alors une vitesse proscrite supérieure à une vitesse maximale pour laquelle le moteur thermique est conçu, cette vitesse maximale étant en effet donnée par le constructeur. L'homme du métier indique classiquement que le moteur thermique est en survitesse. Ce phénomène est grave dans la mesure où il a pour conséquence l'explosion du moteur thermique.

Par suite, quand le pilote ou un moyen dédié détecte une survitesse, il ordonne l'injection du fluide dans le moteur thermique, sans injection complémentaire de carburant, pour diminuer le pouvoir calorifique de l'ensemble comprenant le carburant et le fluide.

On peut maximiser l'effet du fluide en l'injectant dans la chambre de combustion du moteur thermique conjointement avec le carburant, et donc par les injecteurs de carburant. Le fluide tend à remplacer en partie le carburant. Ainsi, on ralentit la vitesse de l'organe mobile en étouffant le moteur thermique, l'étouffement résultant d'une limitation du carburant alimentant la chambre de combustion du moteur thermique.

A l'inverse, un organe mobile devant être mis en mouvement à une vitesse bornée par une vitesse minimale donnée à chaque instant, on injecte le fluide lorsque l'organe mobile se déplace à une vitesse inférieure à la vitesse minimale donnée.

Dans cette situation, une panne met le moteur thermique au ralenti. Par suite, la vitesse de déplacement de l'organe mobile, une turbine ou un arbre de sortie ou encore un piston par exemple, devient inférieure à une vitesse minimale de déplacement, déterminée et fixée par une consigne donnée par le constructeur.

En injectant le fluide dans le moteur, et en augmentant le débit carburant, on augmente la puissance développée par le moteur thermique.

L'injection peut être requise par le pilote lorsqu'il détecte la panne, ou encore par un organe de commande.

Lorsque le moteur thermique est un turbomoteur muni d'une turbine libre et d'un générateur de gaz, on injecte le fluide lorsqu'un paramètre de surveillance dépasse un seuil prédéterminé en devenant supérieur à un seuil prédéterminé maximal ou inférieur à un seuil minimal prédéterminé, le paramètre de surveillance faisant partie d'une première liste prédéterminée comportant au moins un des paramètres suivants : le régime de rotation du générateur de gaz, le régime de rotation de la turbine libre, la température des gaz à l'entrée de la turbine libre et un débit du carburant alimentant le moteur thermique.

En effet, en cas de survitesse du moteur thermique, on constate qu'au moins un desdits paramètres de surveillance est supérieur à un seuil prédéterminé maximal, alors qu'en cas de nécessité d'un surplus de puissance voire au ralenti, au moins un desdits paramètres de surveillance est inférieur à un seuil prédéterminé minimal.

Autrement dit, on injecte le fluide si la valeur d'un paramètre de surveillance est supérieure à un seuil maximal donné de ce paramètre, ou encore si la valeur d'un paramètre de surveillance est inférieure à un seuil minimal donné de ce paramètre.

En fonction du paramètre ou du seuil concerné, à savoir le seuil minimal ou le seuil maximal, on peut choisir des points d'injection du fluide différents. Par exemple, on peut prévoir une injection conjointe avec le carburant en cas de dépassement d'un seuil maximal, et une injection séparée du carburant en cas de passage sous un seuil minimal.

De plus, le fluide peut faire partie d'une deuxième liste prédéterminée, la deuxième liste incluant au moins une des solutions aqueuses suivantes : de l'eau pure, un premier mélange d'eau pure et d'un antigel, et un deuxième mélange d'eau pure avec au moins un antigel et un lubrifiant. Par exemple, le deuxième mélange contient de l'eau, un antigel ayant 10% à 20% d'éthylène-glycol pour retarder le passage d'un état liquide vers un état solide, un lubrifiant ayant 0.1% à 1% de sulfure de sodium et de benzothiazole-2-yle, voire des huiles minérales sévèrement raffinées.

Ainsi, l'installation motrice peut contenir une première bonbonne d'eau pure, et une deuxième bonbonne contenant une solution intermédiaire comprenant soit un antigel par exemple du type précité soit un troisième mélange comprenant au moins un antigel et un lubrifiant par exemple du type précité, le fluide pouvant être injecté dans le moteur thermique ou dans la boîte de transmission de puissance par exemple quand un système de lubrification de ladite boîte de transmission de puissance ne fonctionne plus, on utilise uniquement la première bonbonne pour alimenter le moteur thermique lorsque le fluide est destiné au moteur thermique et on mélange l'eau pure de la première bonbonne à la solution intermédiaire de la deuxième bonbonne lorsque le fluide est destiné à la boîte de transmission de puissance.

Autrement dit, la première bobonne du réservoir comporte le fluide à injecter au moteur thermique, et la deuxième bonbonne comporte des compléments pour l'injection du fluide dans la boîte de transmission de puissance. On injecte le fluide, de l'eau pure, dans le moteur thermique, alors que l'on injecte un moyen aqueux résultant du mélange dudit fluide avec des compléments dans la boite de transmission de puissance.

Chaque élément, à savoir la boîte de transmission de puissance et le moteur thermique, reçoit alors un fluide optimisé pour sa propre application.

Selon un autre aspect, l'installation motrice comportant deux moteurs thermiques aptes à fonctionner à au moins un premier régime lorsqu'aucun des moteurs thermiques est en panne et à au moins un régime d'urgence lorsqu'un des moteurs thermiques est en panne, le moteur thermique en état de fonctionnement développant une puissance de super urgence pendant un durée prédéterminée durant le régime d'urgence, on injecte le fluide pour augmenter la puissance de super urgence ou pour augmenter la durée prédéterminée.

Concernant cette injection de fluide, le moteur thermique étant un turbomoteur muni d'une turbine libre et d'un générateur de gaz, le générateur de gaz comprenant une entrée d'air et une chambre de combustion dans laquelle est injecté un carburant, on injecte le fluide selon un processus d'injection à choisir parmi une troisième liste prédéterminée comprenant au moins un des processus d'injection suivants :
- le fluide est injecté dans un tuyau d'alimentation en carburant du moteur thermique pour être envoyé dans la chambre de combustion conjointement avec le carburant,
- le fluide est injecté dans la chambre de combustion afin d'être injecté dans cette chambre de combustion indépendamment du carburant,
- le fluide est injecté dans l'entrée d'air.

Le fluide peut en outre être envoyé par une buse de pulvérisation sous forme de brouillard le cas échéant.

Il est à noter que la destination du fluide peut varier en fonction du besoin. Par exemple, dans une réalisation manuelle, le pilote peut avoir un sélecteur comprenant les diverses solutions de la troisième liste prédéterminée, et choisir une solution en positionnant le sélecteur sur la solution choisie.

Selon une réalisation automatique, un organe de commande de type processeur associé à une mémoire détermine à l'aide de lois préprogrammées s'il doit injecter un fluide dans le moteur thermique. Dans l'affirmative, il détermine où il doit injecter ce fluide et éventuellement la nature même du fluide, à savoir de l'eau pure ou un mélange spécifique.

Outre un procédé, l'invention vise une installation motrice apte à mettre en oeuvre ledit procédé munie d'au moins un moteur thermique ainsi que d'une boîte de transmission de puissance principale et d'un réservoir de fluide, le moteur thermique entraînant ladite boîte de transmission de puissance.

Cette installation motrice est remarquable en ce que le réservoir de fluide est lié hydrauliquement par une liaison hydraulique à la boîte de transmission de puissance et à chaque moteur thermique pour lubrifier la boîte de transmission de puissance et augmenter la puissance du moteur thermique sans augmenter la température de ce moteur thermique ou pour diminuer la température du moteur thermique sans diminuer la puissance de ce moteur thermique, l'installation motrice comprenant au moins un moyen d'obturation principal entre chaque moteur thermique et le réservoir ainsi qu'au moins un moyen d'obturation secondaire entre la boîte de transmission de puissance et le réservoir, l'installation motrice comportant un organe de commande des moyens d'obturation principal et secondaire.

De plus, on note que chaque moyen d'obturation principal peut être distinct de chaque moyen d'obturation secondaire.

L'organe de commande est éventuellement un processeur muni d'une mémoire, cet organe de commande commandant les moyens d'obturation principal et secondaire à l'aide de lois préprogrammées ou encore sur l'ordre du pilote, cet ordre pouvant provenir d'un bouton de type sélecteur par exemple.

En outre, le réservoir est rempli d'un moyen aqueux apte à alimenter le moteur thermique à J'aide d'un fluide, et / ou la boîte de transmission de puissance.

L'installation motrice peut aussi comporter une ou plusieurs des caractéristiques qui suivent.

Ainsi, il y a un moyen d'obturation entre chaque zone d'injection du fluide et le réservoir.

Selon une variante, chaque moyen d'obturation principal comporte une valve d'admission principale et chaque moyen d'obturation secondaire comporte une valve d'admission secondaire.

La liaison hydraulique comportant au moins une tuyauterie d'injection reliant une zone d'injection vers un moteur thermique et le réservoir, chaque tuyauterie d'injection est alors munie d'une valve d'admission principale. De même, la liaison hydraulique comportant au moins une canalisation reliant une zone d'injection du fluide vers la boîte de transmission de puissance et le réservoir, chaque canalisation est pourvue d'une valve d'admission secondaire.

Une valve d'admission est physiquement distincte d'une autre valve d'admission.

A l'inverse, selon une autre variante, chaque moyen d'obturation est intégré dans un unique distributeur hydraulique qui remplit le rôle des valves d'admission principale et secondaire. Ce distributeur hydraulique est relié au réservoir et à chaque zone d'injection, le distributeur pouvant alimenter une ou plusieurs zones d'injection en fonction des ordres donnés.

Par ailleurs, la boîte de transmission de puissance comportant au moins un organe à lubrifier, un engrenage ou un pignon par exemple, la liaison hydraulique comporte une canalisation débouchant sur une buse d'injection dirigée vers cet organe, la buse étant apte à injecter un fluide provenant du réservoir sous forme de jet ou de brouillard.

De plus, le moteur thermique étant un turbomoteur muni d'une turbine libre et d'un générateur de gaz, le générateur de gaz comprenant une entrée d'air et une chambre de combustion dans laquelle est injecté un carburant, la liaison hydraulique comporte au moins une tuyauterie d'injection à choisir parmi une quatrième liste prédéterminée comprenant au moins une des tuyauteries d'injection suivantes :
- une première tuyauterie d'injection débouchant sur un tuyau d'alimentation en carburant du moteur thermique pour être envoyé dans la chambre de combustion conjointement avec ledit carburant,
- une deuxième tuyauterie d'injection débouchant sur la chambre de combustion afin d'injecter le fluide dans cette chambre de combustion indépendamment du carburant,
- une troisième tuyauterie d'injection débouchant sur l'entrée d'air.

Par ailleurs, le réservoir peut comporter :
- soit une unique bonbonne munie du fluide à injecter dans le moteur thermique,
- soit une première bonbonne remplie d'eau pure et une deuxième bonbonne remplie d'une solution intermédiaire comprenant un antigel ou un troisième mélange d'au moins un antigel et un lubrifiant, les première et deuxième bonbonnes débouchant sur un mélangeur relié à ladite liaison hydraulique.

En outre le réservoir peut être équipé d'un système de chauffage du fluide afin d'empêcher le gel de ce fluide. Ce système peut par exemple être constitué de résistances électriques pouvant être alimentées par le réseau électrique de l'aéronef, chaque bobonne comportant au moins une résistance électrique.

Enfin, le réservoir comportant au moins une bonbonne, le réservoir est muni d'une pompe de transfert par bonbonne. L'organe de commande module éventuellement la pression de transfert du fluide en fonction de sa destination.

L'invention et ses avantages apparaîtront avec plus de détails dans le cadre de la description qui suit avec des exemples de réalisation donnés à titre illustratif en référence aux figures annexées qui représentent :
- la figure 1, un schéma explicitant le procédé selon l'invention,
- la figure 2, un premier mode de réalisation pourvu d'un réservoir muni d'une bonbonne,
- la figure 3, un deuxième mode de réalisation pourvu d'un réservoir muni de deux bonbonnes, et
- la figure 4, une variante des premier et deuxième modes de réalisation munie d'un distributeur hydraulique.

Les éléments présents dans plusieurs figures distinctes sont affectés d'une seule et même référence.

La présente invention concerne un procédé pour sécuriser une installation motrice 10, l'installation motrice 10 comportant au moins un moteur thermique 1 entraînant une boîte de transmission de puissance BTP.

Dans le cadre d'un giravion, et notamment un hélicoptère, la boîte de transmission de puissance BTP entraîne en rotation un mât rotor 5 autour d'un axe de rotation AX, le mât rotor 5 étant solidaire d'un moyeu 6 pourvu d'une pluralité de pales 7. Une telle boîte de transmission de puissance BTP est dénommée classiquement Boîte de Transmission Principale.

Selon l'invention, l'installation motrice comporte un réservoir 30 rempli par un fluide comprenant de l'eau relié à la boîte de transmission de puissance BTP et au moteur thermique 1. Ainsi, le réservoir est rempli d'un fluide apte à être injecté dans le moteur thermique 1 et/ ou dans la boîte de transmission de puissance BTP.

Le fluide peut être choisi parmi une liste dénommée deuxième liste prédéterminée, cette deuxième liste incluant au moins une des solutions aqueuses suivantes : de l'eau pure, un premier mélange d'eau pure et d'un antigel de type éthylène-glycol par exemple, et un deuxième mélange d'eau pure avec au moins un antigel et un lubrifiant.

Le réservoir 30 peut comporter une unique bonbonne remplie dudit fluide, ou une pluralité de bonbonnes 33, 34 permettant de contenir les divers constituants du fluide.

Dès lors, en accord avec le procédé selon l'invention, on injecte ce fluide dans le moteur thermique 1 pour aboutir à au moins une situation contenue dans un catalogue de situations prédéterminées. Ce catalogue comprend au moins une des situations :
- l'augmentation d'une puissance développée par le moteur thermique 1 sans augmenter la température d'un organe du moteur thermique, l'entrée d'un étage de turbine libre d'un turbomoteur par exemple,
- la diminution de la température d'un organe du moteur thermique sans modifier la puissance développée par le moteur thermique, la température T4 de l'entrée d'un étage de turbine libre d'un turbomoteur par exemple.

De plus, le catalogue peut aussi comprendre une ou plusieurs des situations additionnelles suivantes :
- un organe mobile devant être mis en mouvement à une vitesse bornée par une vitesse maximale donnée à chaque instant, on injecte le fluide lorsque l'organe mobile se déplace à une vitesse supérieure à ladite vitesse maximale donnée,
- un organe mobile devant être mis en mouvement à une vitesse bornée par une vitesse minimale donnée à chaque instant, on injecte ledit fluide lorsque ledit organe mobile se déplace à une vitesse inférieure à ladite vitesse minimale donnée,
- le moteur thermique 1 étant un turbomoteur muni d'une turbine libre et d'un générateur de gaz, on injecte ledit fluide lorsqu'un paramètre de surveillance dépasse un seuil prédéterminé, à savoir passe en dessous d'un seuil minimal ou au dessus d'un seuil maximal, le paramètre de surveillance faisant partie d'une première liste comportant au moins un des paramètres suivants : le régime de rotation dudit générateur de gaz Ng, le régime de rotation de la turbine libre NTL, la température des gaz T4 à l'entrée de la turbine libre et le débit Q du carburant alimentant le moteur thermique,
- l'installation motrice comportant deux moteurs thermiques aptes à fonctionner à au moins un premier régime lorsqu'aucun des moteurs thermiques est en panne et à au moins un régime d'urgence lorsqu'un des moteurs thermiques est en panne, le moteur en état de fonctionnement développant une puissance de super urgence PSU pendant un durée prédéterminée D1 durant ledit régime d'urgence, on injecte le fluide pour augmenter la puissance de super urgence PSU ou pour augmenter la durée prédéterminée D1.

Par ailleurs, selon le procédé, lorsque le moteur thermique est un turbomoteur muni d'une turbine libre et d'un générateur de gaz, le générateur de gaz comprenant une entrée d'air et une chambre de combustion dans laquelle est injecté un carburant, on injecte le fluide selon un processus d'injection à choisir parmi une troisième liste comprenant au moins un des processus d'injection suivant :
- le fluide est injecté dans un tuyau d'alimentation en carburant du moteur thermique 1 pour être envoyé dans la chambre de combustion conjointement avec le carburant,
- le fluide est injecté dans la chambre de combustion afin d'être injecté dans cette chambre de combustion indépendamment du carburant,
- ledit fluide est injecté dans l'entrée d'air.

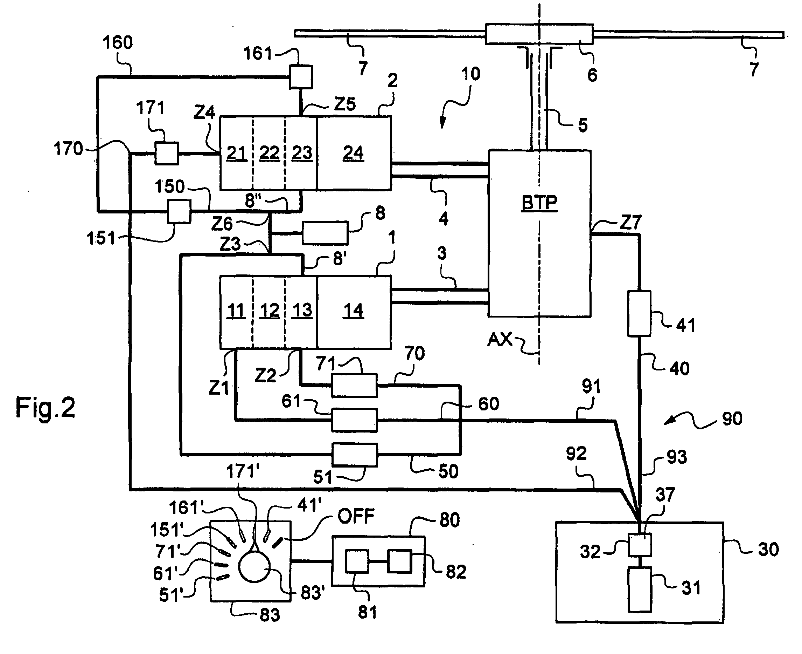

La figure 2 présente un premier mode de réalisation pourvu d'un réservoir muni d'une bonbonne, cette réalisation étant une réalisation préférée du fait de sa simplicité.

L'installation motrice représentée comporte un premier et un deuxième moteurs thermiques 1, 2 de type turbomoteur. Ces premier et deuxième moteurs thermiques 1, 2 sont alimentés en carburant par une citerne 8 de carburant, respectivement via des premier et deuxième tuyaux d'alimentation en carburant 8', 8".

Ainsi, le premier moteur thermique 1 est muni d'un premier générateur de gaz comportant successivement une première entrée d'air 11, un premier compresseur 12 et une première chambre de combustion 13, une première turbine liée au premier compresseur 12 pouvant être disposée à la sortie de la première chambre de combustion 13. Un premier étage de turbine libre 14 est disposé à la suite du premier générateur de gaz, à savoir à la suite de la première chambre de combustion 13 ou de la première turbine le cas échéant.

De même, le deuxième moteur thermique 2 est muni d'un deuxième générateur de gaz comportant successivement une deuxième entrée d'air 21, un deuxième compresseur 22 et une deuxième chambre de combustion 23, une deuxième turbine liée au deuxième compresseur 22 pouvant être disposée à la sortie de la deuxième chambre de combustion 23. Un deuxième étage de turbine libre 24 est disposé à la suite du deuxième générateur de gaz, à savoir à la suite de la deuxième chambre de combustion 23 ou de la deuxième turbine le cas échéant.

L'installation motrice 10 possède de plus, un réservoir 30 contenant un fluide à base d'eau apte à être injecté à l'intérieur de chaque moteur thermique 1, 2, via au moins une zone d'injection et optionnellement à l'intérieur de la boîte de transmission de puissance BTP via au moins une zone d'injection.

Ainsi, l'installation motrice 10 comporte une liaison hydraulique reliant le réservoir 30 à chaque zone d'injection Z1, Z2, Z3, Z4, Z5, Z6, Z7, un moyen d'obturation principal étant agencé entre chaque zone d'injection Z1, Z2, Z3, Z4, Z5, Z6 des moteurs thermiques et le réservoir 30 et un moyen d'obturation secondaire étant agencé entre chaque zone d'injection Z7 de la boîte de transmission de puissance BTP et le réservoir 30.

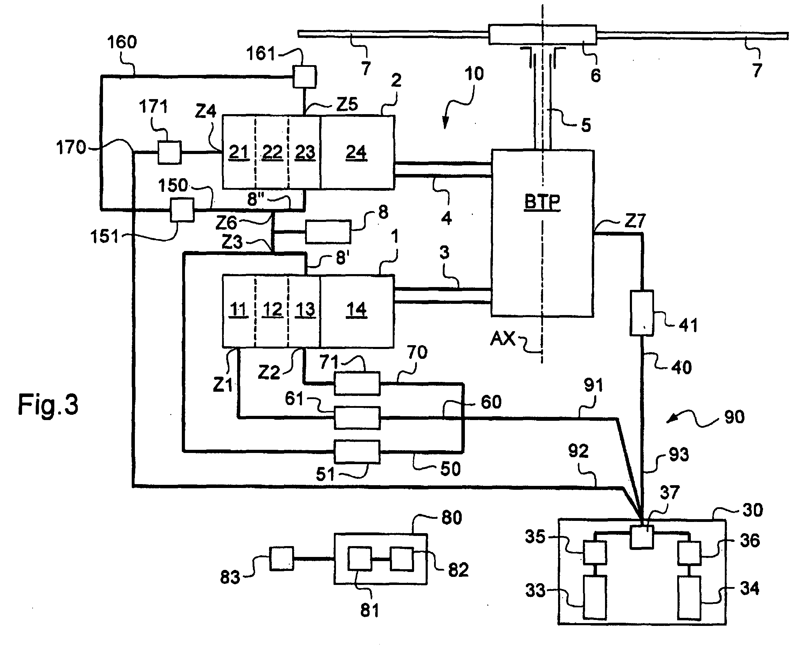

En référence aux figures 2 et 3 selon une première variante la liaison hydraulique comporte une première liaison intermédiaire 91 partant du réservoir 30 vers le premier moteur thermique 1, cette première liaison intermédiaire 91 étant un tuyau par exemple.

Le premier moteur thermique étant un turbomoteur, la première liaison intermédiaire 91 est avantageusement prolongée par une première tuyauterie d'injection 50 munie d'une valve d'admission principale 51 d'un moyen d'obturation principal qui débouche sur une zone d'injection Z3 du premier tuyau d'alimentation en carburant 8' alimentant la première chambre de combustion 13. De plus, la première liaison intermédiaire 91 est aussi reliée à une deuxième tuyauterie d'injection 70 munie d'une valve d'admission principale 71 d'un moyen d'obturation principal qui débouche directement sur une zone d'injection Z2 de la première chambre de combustion 13. Enfin, la première liaison intermédiaire 91 est reliée à une troisième tuyauterie d'injection 60 munie d'une valve d'admission principale 61 d'un moyen d'obturation principal qui débouche sur une zone d'injection Z1 de la première entrée d'air 11.

Dès lors, chaque zone d'injection Z1 Z2, Z3 du premier moteur thermique est donc séparée du réservoir 30 par un moyen d'obturation principal apte à empêcher ou autoriser le passage d'un fluide du réservoir vers le premier moteur thermique 1.

De même, la liaison hydraulique comporte une deuxième liaison intermédiaire 92 partant du réservoir 30 vers le deuxième moteur thermique 2, cette deuxième liaison intermédiaire 92 étant un tuyau par exemple. Le deuxième moteur thermique 2 étant un turbomoteur, la deuxième liaison intermédiaire 92 est avantageusement prolongée par une deuxième tuyauterie d'injection 150 munie d'une valve d'admission principale 151 d'un moyen d'obturation principal qui débouche sur une zone d'injection Z6 d'un deuxième tuyau d'alimentation en carburant 8" alimentant la deuxième chambre de combustion 23. De plus, la deuxième liaison intermédiaire 92 est reliée à une deuxième tuyauterie d'injection 160 munie d'une valve d'admission principale 161 d'un moyen d'obturation principal qui débouche directement sur une zone d'injection Z5 de la deuxième chambre de combustion 23. Enfin, la deuxième liaison intermédiaire 92 est reliée à une troisième tuyauterie d'injection 170 munie d'une valve d'admission principale 171 d'un moyen d'obturation principal qui débouche sur une zone d'injection Z4 de la deuxième entrée d'air 21.

Dès lors, chaque zone d'injection Z4, Z5, Z6 du deuxième moteur thermique est donc séparée du réservoir 30 par un moyen d'obturation principal apte à empêcher ou autoriser le passage d'un fluide du réservoir vers le deuxième moteur thermique 2.

Enfin, la liaison hydraulique comporte une troisième liaison intermédiaire 93 partant du réservoir 30 prolongée par une canalisation 40 et un moyen d'obturation secondaire débouchant sur une zone d'injection Z7 de la boîte de transmission de puissance BTP munie d'au moins une buse d'injection de fluide. La canalisation 40 est alors munie d'un moyen d'obturation secondaire 41.

Chaque zone d'injection est donc séparée du réservoir par une valve d'admission d'un moyen d'obturation, deux valves différentes étant physiquement distinctes en constituant deux équipements différents.

Il est concevable de seulement implémenter une ou deux des tuyauteries d'injection 50, 60, 70 précédentes par exemple.

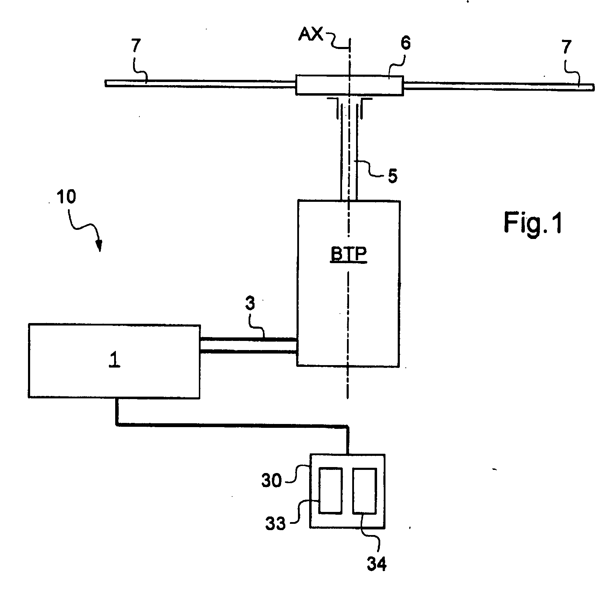

Selon le premier mode de réalisation de la figure 1, le réservoir 30 comporte une unique bonbonne 31 remplie d'un fluide et éventuellement une pompe de transfert 32 ou tout autre système de pressurisation, notamment les systèmes du document FR2826094 par exemple

Par ailleurs, l'installation motrice 10 est pourvue d'un organe de commande 80, comportant un processeur 81 lié à une mémoire 82.

Cet organe de commande 80 est relié électriquement aux valves d'admission principales 51 61, 71, 151, 161, 171, à la valve d'admission secondaire 41 et à la pompe 32 afin de leur ordonner d'alimenter en fluide la zone d'injection associée.

On note que la liaison électrique entre l'organe de commande 80 et les valves d'admission principales 51, 61, 71, 151, 161, 171, la valve d'admission secondaire 41 et la pompe 32 n'est pas représentée sur les figures dans un souci de simplification de ces figures. Cette liaison électrique peut être de type filaire ou non filaire.

Les valves d'admission principales 51, 61, 71, 151, 161, 171, et la valve d'admission secondaire 41 sont dans une configuration normale en mode « fermé », de manière à empêcher la circulation de fluide du réservoir 30 vers la zone d'injection associée.

Dans un mode de fonctionnement automatique, le processeur 81 fait appel à des lois de régulation préprogrammées dans la mémoire 82 pour déterminer si une valve doit être ouverte.

Par exemple, si le processeur est avisé que le premier étage de turbine libre 14 du premier moteur thermique 1 tourne à une vitesse supérieure à une vitesse maximale programmée dans la mémoire 82, via des capteurs dédiés à cet effet, le processeur 81 ouvre la valve d'admission 51 de la première tuyauterie d'injection 50 et active la pompe 32 pour injecter le fluide dans la première chambre de combustion 13 conjointement avec le carburant à une pression préprogrammée dans ladite mémoire 82.

A l'inverse, si le processeur est avisé que le premier étage de turbine libre 14 du premier moteur thermique 1 tourne à une vitesse inférieure à une vitesse minimale programmée dans la mémoire 82, via des capteurs dédiés à cet effet, le processeur 81 ouvre la valve d'admission 61 de la troisième tuyauterie d'injection 60 et active la pompe 32 pour injecter le fluide dans la première chambre de combustion indépendamment du carburant à une pression préprogrammée dans ladite mémoire 82.

Dans un mode de fonctionnement manuel, le pilote dispose d'un moyen de commande 83 muni d'un bouton rotatif 83'. Lorsque le bouton rotatif est sur la position « OFF », toutes les valves sont fermées.

Par contre, lorsque l'on place le bouton sur une autre position, une ou plusieurs valves sont ouvertes. Par exemple, les positions 51', 61', 71', 151', 161', 171', 41' ouvrent respectivement les valves 51, 61, 71, 151, 161, 171, 41.

En référence à la figure 3, selon un deuxième mode de réalisation, le réservoir 30 comporte une pluralité de bonbonnes munies chacune d'une pompe débouchant sur un mélangeur 37.

Par exemple, le réservoir 30 comporte une première bonbonne 33 d'eau pure associée à une première pompe 35, et une deuxième bonbonne 33 associée à une deuxième pompe 36 et contenant une solution intermédiaire comprenant soit un antigel soit un troisième mélange d'au moins un antigel et un lubrifiant.

Ainsi, lorsqu'il doit alimenter en fluide un moteur thermique, le processeur 81 demande au mélangeur 37 de bloquer le liquide provenant de la deuxième bonbonne. A contrario, lorsqu'il doit alimenter en fluide la boîte de transmission de puissance, le processeur demande au mélangeur 37 de mélanger l'eau pure de la première bonbonne 33 à la solution intermédiaire de la deuxième bonbonne 34.

Il est à noter que l'organe de commande 80 peut être un organe de commande dédié, ou encore être intégré à un moyen existant, l'organe de régulation des moteurs thermiques 1, 2 par exemple.

Les figures 2 et 3 présentent une variante comportant une pluralité de moyens d'obturation principaux et secondaire distincts physiquement les uns des autres.

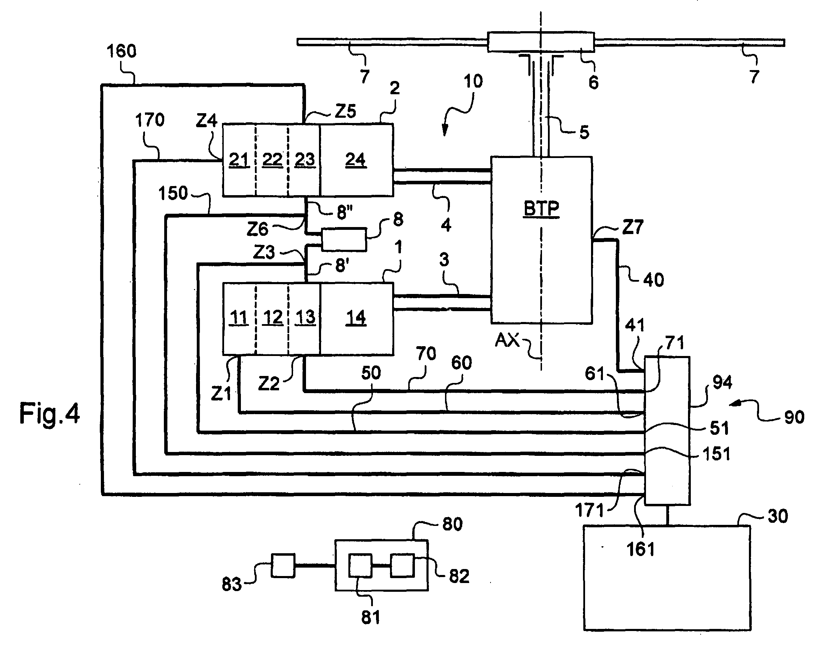

Toutefois, en référence à la figure 4, ces moyens d'obturation principaux et secondaire peuvent faire partie d'un seul et unique équipement, un distributeur hydraulique 94.

Ce distributeur hydraulique peut comporter un tiroir, un orifice d'entrée, et une pluralité d'orifices de sortie représentant les valves d'admission principale 51, 61, 71, 151, 161, 171 et secondaire 41. En déplaçant le tiroir, l'organe de commande 80 requiert alors l'ouverture d'une ou plusieurs valves le cas échéant.

Le distributeur hydraulique est alors commandé par l'organe de commande 80 via une liaison électrique non représentée.

Chaque moyen d'obturation principal est donc distinct de chaque moyen d'obturation secondaire, même si les valves font partie d'un même ensemble.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour augmenter la sécurité d'une installation motrice (10) munie d'au moins un moteur thermique (1, 2) et d'une boîte de transmission de puissance (BTP), ledit moteur thermique (1, 2) entraînant ladite boîte de transmission de puissance (BTP), ladite boîte de transmission de puissance (BTP) ayant un système de lubrification réalisé à l'aide d'un moyen aqueux stocké dans un réservoir (30),
au cours duquel on injecte un fluide comprenant de l'eau dans ledit moteur thermique (1, 2) pour augmenter une puissance développée par le moteur thermique (1, 2) sans augmenter la température d'un organe du moteur thermique (1, 2) ou pour diminuer ladite température sans modifier la puissance développée par le moteur thermique (1, 2), ledit fluide étant prélevé dans ledit réservoir (30).

2. Procédé selon la revendication 1,
**caractérisé en ce que**, un organe mobile (14, 24) devant être mis en mouvement à une vitesse bornée par une vitesse maximale donnée à chaque instant, on injecte ledit fluide lorsque ledit organe mobile (14, 24) se déplace à une vitesse supérieure à ladite vitesse maximale donnée.

3. Procédé selon l'une quelconque des revendications 1 à 2,
**caractérisé en ce que**, un organe mobile (14, 24) devant être mis en mouvement à une vitesse bornée par une vitesse minimale donnée à chaque instant, on injecte ledit fluide lorsque ledit organe mobile (14, 24) se déplace à une vitesse inférieure à ladite vitesse minimale donnée.

4. Procédé selon l'une quelconque des revendications 1 à 3,
**caractérisé en ce que**, ledit moteur thermique (1, 2) étant un turbomoteur muni d'une turbine libre (14, 24) et d'un générateur de gaz (11-12-13, 21-22-23), on injecte ledit fluide lorsqu'un paramètre de surveillance (Ng, NTL, T4, Q) dépasse un seuil prédéterminé en devenant supérieur à seuil prédéterminé maximal ou inférieur à un seuil minimal prédéterminé, ledit paramètre de surveillance faisant partie d'une première liste comportant au moins un des paramètres suivants : le régime de rotation (Ng) dudit générateur de gaz (11-12-13, 21-22-23), le régime de rotation de ladite turbine libre (NTL) la température d'éjection des gaz (T4) à l'entrée de la turbine libre (14, 24) et un débit (Q) du carburant alimentant ledit moteur thermique (1, 2).

5. Procédé selon l'une quelconque des revendications 1 à 4,
**caractérisé en ce que** ledit fluide est un fluide à choisir parmi une deuxième liste prédéterminée, ladite deuxième liste incluant au moins une des solutions aqueuses suivantes : de l'eau pure, un premier mélange d'eau pure et d'un antigel, et un deuxième mélange d'eau pure avec au moins un antigel et un lubrifiant.

6. Procédé selon l'une quelconque des revendications 1 à 5,
**caractérisé en ce que**, ladite installation motrice (10) contenant une première bonbonne (33) d'eau pure, et une deuxième bonbonne (34) contenant une solution intermédiaire comprenant soit un antigel soit un troisième mélange d'au moins un antigel et un lubrifiant, un fluide pouvant être injecté dans ledit moteur thermique (1, 2) ou dans ladite boîte de transmission de puissance (BTP), on utilise uniquement la première bonbonne (33) pour alimenter ledit moteur thermique (1, 2) lorsque ledit fluide est destiné audit moteur thermique (1, 2) et on mélange l'eau pure de la première bonbonne (33) à la solution intermédiaire de la deuxième bonbonne (34) lorsque ledit fluide est destiné à ladite boîte de transmission de puissance (BTP).

7. Procédé selon l'une quelconque des revendications 1 à 6,
**caractérisé en ce que**, ladite installation motrice (10) comportant deux moteurs thermiques (1, 2) aptes à fonctionner à au moins un premier régime lorsqu'aucun desdits moteurs thermiques (1, 2) est en panne et à au moins un régime d'urgence lorsqu'un desdits moteurs thermiques est en panne, ledit moteur en état de fonctionnement développant une puissance de super urgence (PSU) pendant un durée prédéterminée (D1) durant ledit régime d'urgence, on injecte ledit fluide pour augmenter ladite puissance de super urgence (PSU) ou pour augmenter ladite durée prédéterminée (D1).

8. Procédé selon l'une quelconque des revendications 1 à 7,
**caractérisé en ce que** ledit moteur thermique (1, 2) étant un turbomoteur muni d'une turbine libre (14, 24) et d'un générateur de gaz (11-12-13, 21-22-23), ledit générateur de gaz (11-12-13, 21-22-23) comprenant une entrée d'air (11, 21) et une chambre de combustion (13, 23) dans laquelle est injecté un carburant, on injecte ledit fluide selon un processus d'injection à choisir parmi une troisième liste comprenant au moins un des processus d'injection suivant :
- ledit fluide est injecté dans une tuyauterie d'alimentation en carburant (8', 8") dudit moteur thermique (1, 2) pour être envoyé dans ladite chambre de combustion (13, 23) conjointement avec ledit carburant,
- ledit fluide est injecté dans la chambre de combustion (13, 23) afin d'être injecté dans cette chambre de combustion (13, 23) indépendamment dudit carburant,
- ledit fluide est injecté dans ladite entrée d'air (11, 21).

9. Installation motrice (10) munie d'au moins un moteur thermique (1, 2) ainsi que d'une boîte de transmission de puissance (BTP) et d'un réservoir (30), ledit moteur thermique (1, 2) entraînant ladite boîte de transmission de puissance (BTP),
**caractérisée en ce que** ledit réservoir (30) est lié hydrauliquement par une liaison hydraulique (90) à ladite boite de transmission de puissance (BTP) et à chaque moteur thermique (1, 2) pour lubrifier la boîte de transmission de puissance (BTP) et augmenter la puissance du moteur thermique (1, 2) sans augmenter sa température ou pour diminuer la température du moteur thermique (1, 2) sans diminuer sa puissance, l'installation motrice (10) comprenant au moins un moyen d'obturation principal (51, 61, 71, 151, 161, 171, 94) entre chaque moteur thermique (1, 2) et ledit réservoir (30) ainsi qu'au moins un moyen d'obturation secondaire (41, 94) entre ladite boîte de transmission de puissance (BTP) et ledit réservoir (30), ladite installation motrice (10) comportant un organe de commande (80) desdits moyens d'obturation principal (51, 61, 71, 151, 161, 171, 94) et secondaire (41, 94).

10. Installation motrice selon la revendication 9,
**caractérisé en ce que** chaque moyen d'obturation principal comporte une valve d'admission principale et chaque moyen d'obturation secondaire comporte une valve d'admission secondaire.

11. Installation motrice l'une quelconque des revendications 9 à 10,
**caractérisé en ce que** ladite boîte de transmission de puissance (BTP) comportant au moins un organe à lubrifier, ladite liaison hydraulique comporte une canalisation (40) débouchant sur une buse d'injection dirigée vers ledit organe, ladite buse étant apte à injecter un fluide provenant dudit réservoir sous forme de jet ou de brouillard.

12. Installation motrice selon l'une quelconque des revendications 9 à 11,
**caractérisé en ce que** ledit moteur thermique (1, 2) étant un turbomoteur muni d'une turbine libre (14, 24) et d'un générateur de gaz (11-12-13, 21-22-23), ledit générateur de gaz (11-12-13, 21-22-23) comprenant une entrée d'air (11, 21) et une chambre de combustion (13, 23) dans laquelle est injecté un carburant, ladite liaison hydraulique (90) comporte au moins une tuyauterie d'injection à choisir parmi une quatrième liste comprenant au moins une des tuyauteries d'injection suivantes :
- une première tuyauterie d'injection (50, 150) débouchant sur une tuyauterie d'alimentation en carburant (8', 8") dudit moteur thermique (1, 2) pour être envoyé dans ladite chambre de combustion (13, 23) conjointement avec ledit carburant,
- une deuxième tuyauterie d'injection (70, 160) débouchant sur la chambre de combustion (13, 23) afin d'injecter le fluide dans cette chambre de combustion (13, 23) indépendamment dudit carburant,
- une troisième tuyauterie d'injection (60, 170) débouchant sur ladite entrée d'air (11, 21).

13. Installation motrice l'une quelconque des revendications 9 à 12,
**caractérisé en ce que** ledit réservoir (30) comporte :
- soit une unique bonbonne (31) munie du fluide à injecter dans le moteur thermique,
- soit une première bonbonne (33) remplie d'eau pure et une deuxième bonbonne (34) remplie d'une solution intermédiaire comprenant un antigel ou un troisième mélange d'antigel et de lubrifiant, les première et deuxième bonbonnes (33, 34) débouchant sur un mélangeur (37) relié à ladite liaison hydraulique (90).

14. Installation motrice selon la revendication 13,
**caractérisé en ce que** ledit réservoir (30) comportant au moins une bonbonne (31, 33, 34), ledit réservoir est muni d'une pompe (32, 35, 36) de transfert par bonbonne (31, 33, 34).

15. Installation motrice selon la revendication 9,
**caractérisé en ce que** chaque moyen d'obturation principal est distinct de chaque moyen d'obturation secondaire.

## Claims

1. Method for increasing the safety of a power plant (10) provided with at least one heat engine (1, 2) and a gearbox (BTP), said heat engine (1, 2) driving said gearbox (BTP), said gearbox (BTP) having a lubrication system implemented using an aqueous medium stored in a reservoir (30),
in which method a fluid comprising water is injected into said heat engine (1, 2) to increase a power developed by the heat engine (1, 2) without increasing the temperature of a member of the heat engine (1, 2) or to decrease said temperature without modifying the power developed by the heat engine (1, 2), said fluid being taken from said reservoir (30).

2. Method according to Claim 1,
**characterised in that**, for a movable member (14, 24) that is to be set into motion at a speed limited by a given maximum speed at each instant, said fluid is injected when said movable member (14, 24) is moving at a speed greater than said given maximum speed.

3. Method according to either one of Claims 1 to 2,
**characterised in that**, for a movable member (14, 24) that is to be set into motion at a speed limited by a given minimum speed at each instant, said fluid is injected when said movable member (14, 24) is moving at a speed less than said given minimum speed.

4. Method according to any one of Claims 1 to 3,
**characterised in that**, for said heat engine (1, 2) being a turbine engine provided with a free turbine (14, 24) and a gas generator (11-12-13, 21-22-23), said fluid is injected when a monitored parameter (Ng, NTL, T4, Q) crosses a predetermined threshold by becoming greater than a maximum predetermined threshold or less than a minimum predetermined threshold, said monitored parameter forming part of a first list including at least one of the following parameters: the speed of rotation (Ng) of said gas generator (11-12-13, 21-22-23); the speed of rotation of said free turbine (NTL); the ejection temperature of the gases (T4) at the inlet to the free turbine (14, 24); and a flow rate (Q) of the fuel feeding said heat engine (1, 2).

5. Method according to any one of Claims 1 to 4,
**characterised in that** said fluid is a fluid selected from a second predetermined list, said second list including at least one of the following aqueous solutions: pure water; a first mixture of pure water and an antifreeze; and a second mixture of pure water with at least an antifreeze and a lubricant.

6. Method according to any one of Claims 1 to 5,
**characterised in that**, for said power plant (10) containing a first bottle (33) of pure water and a second bottle (34) containing an intermediate solution comprising either an antifreeze or a third mixture of at least an antifreeze and a lubricant, it being possible to inject a fluid into said heat engine (1, 2) or into said gearbox (BTP), use is made solely of the first bottle (33) for feeding said heat engine (1, 2) when said fluid is intended for said heat engine (1, 2), and the pure water from the first bottle (33) is mixed with the intermediate solution from the second bottle (34) when said fluid is intended for said gearbox (BTP).

7. Method according to any one of Claims 1 to 6,
**characterised in that**, for said power plant (10) including two heat engines (1, 2) suitable for operating at at least a first rating when neither of said heat engines (1, 2) has failed and at at least one emergency rating when one of said heat engines has failed, said working heat engine developing super-emergency power (PSU) for a predetermined duration (D1) when operating at said emergency rating, said fluid is injected to increase said super-emergency power (PSU) or to lengthen said predetermined duration (D1).

8. Method according to any one of Claims 1 to 7,
**characterised in that**, for said heat engine (1, 2) being a turbine engine provided with a free turbine (14, 24) and a gas generator (11-12-13, 21-22-23), said gas generator (11-12-13, 21-22-23) comprising an air inlet (11, 21) and a combustion chamber (13, 23) into which a fuel is injected, said fluid is injected using an injection process selected from a third list comprising at least one of the following injection processes:
- said fluid is injected into a fuel feed pipe (8', 8") for feeding said heat engine (1, 2), so as to be sent into said combustion chamber (13, 23) together with said fuel;
- said fluid is injected into the combustion chamber (13, 23) in order to be injected into said combustion chamber (13, 23) independently of said fuel; and
- said fluid is injected into said air inlet (11, 21).

9. Power plant (10) provided with at least one heat engine (1, 2) and with a gearbox (BTP) and a reservoir (30), said heat engine (1, 2) driving said gearbox (BTP),
**characterised in that** said reservoir (30) is hydraulically connected via a hydraulic connection (90) to said gearbox (BTP) and to each heat engine (1, 2) to lubricate the gearbox (BTP) and to increase the power of the heat engine (1, 2) without increasing its temperature or to reduce the temperature of the heat engine (1, 2) without reducing its power, the power plant (10) comprising at least one main closure means (51, 61, 71, 151, 161, 171, 94) between each heat engine (1, 2) and said reservoir (30), and at least one secondary closure means (41, 94) between said gearbox (BTP) and said reservoir (30), said power plant (10) including a control member (80) for controlling said main (51, 61, 71, 151, 161, 171, 94) and secondary closure means (41, 94).

10. Power plant according to Claim 9,
**characterised in that** each main closure means includes a main admission valve, and each secondary closure means includes a secondary admission valve.

11. Power plant according to either one of Claims 9 to 10,
**characterised in that**, for said gearbox (BTP) including at least one member to be lubricated, said hydraulic connection includes a duct (40) opening out into an injection nozzle directed towards said member, said nozzle being suitable for injecting a fluid from said reservoir in the form of a jet or a mist.

12. Power plant according to any one of Claims 9 to 11,
**characterised in that**, for said heat engine (1, 2) being a turbine engine provided with a free turbine (14, 24) and a gas generator (11-12-13, 21-22-23), said gas generator (11-12-13, 21-22-23) comprising an air inlet (11, 21) and a combustion chamber (13, 23) into which a fuel is injected, said hydraulic connection (90) includes at least one injection pipe selected from a fourth list comprising at least one of the following injection pipes:
- a first injection pipe (50, 150) opening out into a fuel feed pipe (8', 8") of said heat engine (1, 2) in order to be sent into said combustion chamber (13, 23) together with said fuel;
- a second injection pipe (70, 160) opening out into the combustion chamber (13, 23) in order to inject the fluid into said combustion chamber (13, 23) independently of said fuel; and
- a third injection pipe (60, 170) opening out into said air inlet (11, 21).

13. Power plant according to any one of Claims 9 to 12,
**characterised in that** said reservoir (30) includes:
- either a single bottle (31) provided with the fluid for injecting into the heat engine;
- or a first bottle (33) filled with pure water and a second bottle (34) filled with an intermediate solution comprising an antifreeze, or a third mixture of antifreeze and lubricant, the first and second bottles (33, 34) opening out into a mixer (37) connected to said hydraulic connection (90).

14. Power plant according to Claim 13,
**characterised in that** said reservoir (30) includes at least one bottle (31, 33, 34), and said reservoir is provided with one transfer pump (32, 35, 36) per bottle (31, 33, 34).

15. Power plant according to Claim 9,
**characterised in that** each main closure means is distinct from each secondary closure means.

## Patentansprüche

1. Verfahren zur Erhöhung der Sicherheit einer Triebwerkseinheit (10) mit mindestens einem Verbrennungsmotor (1, 2) und einem Leistungsgetriebe (BTP), wobei der Verbrennungsmotor (1, 2) das Leistungsgetriebe (BTP) antreibt, welches ein Schmiersystem aufweist, wobei die Schmierung mit Hilfe eines wässerigen Mittels erfolgt, welches in einem Tank (30) gespeichert ist,
bei dem man ein Fluid, welches Wasser enthält, in den Verbrennungsmotor (1, 2) einspritzt, um die von dem Verbrennungsmotor (1, 2) entwickelte Leistung zu steigern, ohne die Temperatur eines Organs des Verbrennungsmotors (1, 2) zu erhöhen, oder um die Temperatur abzusenken, ohne die von dem Verbrennungsmotor (1, 2) entwickelte Leistung zu ändern, wobei das Fluid dem Tank (30) entnommen wird.

2. Verfahren nach Anspruch 1,
**dadurch gekennzeichnet, dass**, wenn ein mobiles Organ (14, 24) mit einer zu jedem Zeitpunkt auf eine gegebene maximale Geschwindigkeit begrenzten Geschwindigkeit in Bewegung gesetzt werden muss, man das Fluid einspritzt, wenn das mobile Organ (14, 24) sich mit einer größeren Geschwindigkeit als der gegebenen maximalen Geschwindigkeit bewegt.

3. Verfahren nach einem der Ansprüche 1 oder 2,
**dadurch gekennzeichnet, dass**, wenn ein mobiles Organ (14, 24) mit einer Geschwindigkeit bewegt werden muss, die zu jedem Zeitpunkt durch eine minimale Geschwindigkeit begrenzt ist, man das Fluid einspritzt, während das mobile Organ (14, 24) sich mit einer kleineren Geschwindigkeit als der vorgegebenen minimalen Geschwindigkeit bewegt.

4. Verfahren nach einem der Ansprüche 1 bis 3,
**dadurch gekennzeichnet, dass**, wenn der Verbrennungsmotor (1, 2) ein Turbomotor mit einer freilaufenden Turbine (14, 24) und einem Gasgenerator (11-12-13, 21-22-23) ist, man das Fluid einspritzt, wenn ein Überwachungsparameter (Ng, NTL, T4, Q) einen vorbestimmten Schwellenwert überschreitet, indem er größer wird als der maximale vorbestimmte Schwellenwert oder indem er kleiner wird als ein vorbestimmter minimaler Schwellenwert, wobei der Überwachungsparameter Bestandteil einer ersten Liste ist, die mindestens einen der folgenden Parameter umfasst:
den Drehzahlbereich (Ng) des Gasgenerators (11-12-13, 21-22-23), den Drehzahlbereich der freilaufenden Turbine (NTL), die Einspritztemperatur des Gases (T4) am Eingang der freilaufenden Turbine (14, 24) und einen Treibstoffdurchsatz (Q), mit dem der Verbrennungsmotor (1, 2) gespeist wird.

5. Verfahren nach einem der Ansprüche 1 bis 4,
**dadurch gekennzeichnet, dass** das Fluid ein Fluid ist, welches aus einer zweiten vorbestimmten Liste gewählt werden muss, wobei die zweite Liste mindestens eine der folgenden wässerigen Lösungen umfasst: reines Wasser, eine erste Mischung aus reinem Wasser und einem Gefrierschutzmittel, und eine zweite Mischung aus reinem Wasser mit mindestens einem Gefrierschutzmittel und einem Schmiermittel.

6. Verfahren nach einem der Ansprüche 1 bis 5,
**dadurch gekennzeichnet, dass** die Triebwerkseinheit (10) eine erste Flasche (33) für reines Wasser und eine zweite Flasche (34) aufweist, die eine Lösungsmischung enthält, die entweder ein Gefrierschutzmittel oder eine dritte Mischung aus mindestens einem Gefrierschutzmittel und einem Schmiermittel aufweist, wobei ein Fluid in den Verbrennungsmotor (1, 2) oder in das Leistungsgetriebe (BTP) eingespritzt werden kann, und wobei man ausschließlich die erste Flasche (33) verwendet, um den Verbrennungsmotor (1, 2) zu speisen, wenn das Fluid für den Verbrennungsmotor (1, 2) bestimmt ist, und wobei man das reine Wasser aus der ersten Flasche (33) mit der Lösungsmischung aus der zweiten Flasche (34) mischt, wenn das Fluid für das Leistungsgetriebe (BTP) bestimmt ist.

7. Verfahren nach einem der Ansprüche 1 bis 6,
**dadurch gekennzeichnet, dass**, wenn die Triebwerkseinheit (10) zwei Verbrennungsmotoren (1, 2) aufweist, die in mindestens einem ersten Modus funktionieren können, während keiner der Verbrennungsmotoren (1, 2) defekt ist, und in mindestens einem Notfallmodus, während einer der Verbrennungsmotoren defekt ist, wobei, wenn der funktionierende Motor während einer vorbestimmten Zeitspanne (D1) innerhalb des Notfallmodus eine Supemotfallleistung (PSU) entwickelt, man das Fluid einspritzt, um die Supemotfallleistung (PSU) zu erhöhen oder um die vorbestimmte Zeitspanne (D1) zu verlängern.

8. Verfahren nach einem der Ansprüche 1 bis 7,
**dadurch gekennzeichnet, dass**, wenn der Verbrennungsmotor (1, 2) ein Turbomotor mit einer freilaufenden Turbine (14, 24) und einem Gasgenerator (11-12-13, 21-22-23) ist, wobei der Gasgenerator (11-12-13, 21-22-23) einen Lufteinlass (11, 21) und eine Verbrennungskammer (13, 23) aufweist, in die ein Treibstoff eingespritzt wird, man das Fluid gemäß einem Einspritzverfahren einspritzt, das aus einer dritten Liste gewählt wird, die mindestens eines der folgenden Einspritzverfahren umfasst:
- das Fluid wird in ein Kraftstoffspeiseleitungssystem (8',8") des Verbrennungsmotors (1, 2) eingespritzt, um der Verbrennungskammer (13, 23) zusammen mit dem Treibstoff zugeführt zu werden,
- das Fluid wird in die Verbrennungskammer (13, 23) eingespritzt, um somit in diese Verbrennungskammer (13, 23) unabhängig von dem Treibstoff eingespritzt zu werden,
- das Fluid wird in den Lufteinlass (11, 21) eingespritzt.

9. Triebwerkseinheit (10) mit mindestens einem Verbrennungsmotor (1, 2) sowie einem Leistungsgetriebe (BTP) und einem Tank (30), wobei der Verbrennungsmotor (1, 2) das Leistungsgetriebe (BTP) antreibt,
**dadurch gekennzeichnet, dass** der Tank (30) hydraulisch über eine hydraulische Verbindung (90) mit dem Leistungsgetriebe (BTP) und jedem Verbrennungsmotor (1, 2) verbunden ist, um das Leistungsgetriebe (BTP) zu schmieren und die Leistung des Verbrennungsmotors (1, 2) zu erhöhen, ohne dessen Temperatur zu erhöhen, oder um die Temperatur des Verbrennungsmotors (1, 2) zu senken, ohne dessen Leistung zu vermindern, wobei die Triebwerkseinheit (10) mindestens ein Hauptverschlussmittel (51, 61, 71, 151, 161, 171, 94) zwischen jedem Verbrennungsmotor (1, 2) und dem Tank (30) aufweist sowie mindestens ein sekundäres Verschlussmittel (41, 94) zwischen dem Leistungsgetriebe (BTP) und dem Tank (30), wobei die Triebwerkseinheit (10) ein Steuerorgan (80) der Hauptverschlussmittel (51, 61, 71, 151, 161, 171, 94) und der sekundären Verschlussmittel (41, 94) aufweist.

10. Triebwerkseinheit nach Anspruch 9,
**dadurch gekennzeichnet, dass** jedes Hauptverschlussmittel ein Hauptzugangsventil aufweist, und jedes sekundäre Verschlussmittel ein sekundäres Zugangsventil aufweist.

11. Triebwerkseinheit nach einem der Ansprüche 9 oder 10,
**dadurch gekennzeichnet, dass** das Leistungsgetriebe (BTP) mindestens ein Schmierelement aufweist, und die hydraulische Verbindung ein Leitungssystem (40) aufweist, das in einer Einspritzdüse mündet, die auf das Element gerichtet ist, wobei die Düse ein Fluid aus dem Reservoir in Form eines Strahls oder in Form von Nebel einspritzen kann.

12. Triebwerkseinheit nach einem der Ansprüche 9 bis 11,
**dadurch gekennzeichnet, dass** der Verbrennungsmotor (1, 2) ein Turbomotor ist, versehen mit einer freilaufenden Turbine (14, 24) und einem Gasgenerator (11-12-13, 21-22-23), wobei der Gasgenerator (11-12-13, 21-22-23) einen Lufteinlass (11, 21) und eine Verbrennungskammer (13, 23) aufweist, in die ein Treibstoff eingespritzt wird, wobei die hydraulische Verbindung (90) mindestens ein Einspritz-Rohrleitungssystem aufweist, welches aus einer vierten Liste auszuwählen ist, die mindestens eines der folgenden Einspritz-Rohrleitungssysteme umfasst:
- ein erstes Einspritz-Rohrleitungssystem (50, 150), welches in einem Treibstoffspeiserohrleitungssystem (8', 8") des Verbrennungsmotors (1, 2) mündet, damit das Fluid zusammen mit dem Treibstoff in die Verbrennungskammer (13, 23) transportiert wird;
- ein zweites Einspritz-Rohrleitungssystem (70, 160), welches in der Verbrennungskammer (13, 23) mündet, damit das Fluid unabhängig von dem Treibstoff in die Verbrennungskammer (13, 23) eingespritzt wird,
- ein drittes Einspritz-Rohrleitungssystem (60, 170), welches in dem Lufteinlass (11, 21) mündet.

13. Triebwerkseinheit nach einem der Ansprüche 9 bis 12,
**dadurch gekennzeichnet, dass** der Tank (30) aufweist:
- entweder eine einzige Flasche (31), welche ein in den Verbrennungsmotor einzuspritzendes Fluid enthält,
- oder eine erste Flasche (33), die mit reinem Wasser gefüllt ist und eine zweite Flasche (34), die mit einer Lösungsmischung gefüllt ist, die ein Gefrierschutzmittel aufweist oder eine dritte Mischung aus einem Gefrierschutzmittel und einem Schmiermittel, wobei die ersten und zweiten Flaschen (33, 34) in einem Mischer (37) münden, der mit der hydraulischen Verbindung (90) verbunden ist.

14. Triebwerkseinheit nach Anspruch 13,
**dadurch gekennzeichnet, dass** der Tank (30) mindestens eine Flasche (31, 33, 34) aufweist und mit einer Transportpumpe (32, 35, 36) pro Flasche (31, 33, 34) versehen ist.

15. Triebwerkseinheit nach Anspruch 9,
**dadurch gekennzeichnet, dass** jedes Hauptverschlussmittel von jedem sekundären Verschlussmittel verschieden ist.
